# DEMANDE DE BREVET EUROPEEN

(11) **EP 1 150 260 A1**
(43) Date de publication de la demande: **31.10.2001**
(21) Numéro de dépôt: 01460029.0
(22) Date de dépôt: 26.04.2001
(51) Int. Cl.: G07F 7/10, G06K 19/07

(54) **Procédé pour entrer des données dans un objet électronique nomade se présentant sous la forme d'une carte de crédit, postérieurement à sa fabrication**

(30) Priorité: 26.04.2000 FR 0005350
(71) Demandeur: Audiosmartcard International S.A., 75008 Paris (FR)
(72) Inventeur: Moulin, Jean, 91260 Juvisy (FR); Gayet, Alain, 92400 Courbevoie (FR)
(74) Mandataire: Vidon, Patrice

(57) **Abrégé**

L'invention concerne un procédé pour entrer des données de programmation dans un objet électronique nomade (7) se présentant sous la forme d'une carte de crédit.

Les données sont entrées postérieurement à la production de l'objet électronique nomade (7).

Le microprocesseur (1) de l'objet nomade (7) comporte des entrées galvaniques (1a) et une entrée capacitive (1b).

Le procédé comprend :
- l'étape d'établir avec le microprocesseur (1) des liaisons galvaniques (1c) destinées à interconnecter les entrées galvaniques (1a) du microprocesseur (1) avec les autres composants (3, 4, 4b) de l'objet nomade (7),
- l'étape de mettre une sonde capacitive (5) en regard de l'entrée capacitive (1b), du côté de la face extérieure de la coque (2) de l'objet nomade (7) concernée.

Ainsi, la liaison capacitive (1b) avec l'extérieur de l'objet nomade (7) est utilisée pour entrer les données de programmation du microprocesseur (1) postérieurement à la phase de production.

## Description

Le domaine technique concerné par la présente invention est celui de la programmation des microprocesseurs contenus dans des objets nomades de petite taille.

Il est connu des objets nomades de petite taille. De tels objets nomades ont notamment été décrits dans le brevet n° 9306679 du vingt neuf septembre mille neuf cent quatre vingt quinze et ayant pour titre "Dispositif de composition automatique de numéros de téléphone". L'objet nomade décrit dans ce brevet permet à son possesseur de s'identifier de manière sûre et protégée auprès d'un système informatique interrogé à distance. Pour ce faire, l'objet nomade est capable, entre autre, de mémoriser un numéro de téléphone et de le composer par synthèse de fréquence vocale.

La production en grande série d'un objet nomade suppose de concilier simultanément une cadence de production élevée, un coût de revient faible et une très haute fiabilité. Ces trois paramètres sont le plus souvent dépendants du nombre de composants équipant ledit objet nomade et du nombre d'interconnexions qu'ils induisent. Lorsqu'ils se présentent sous la forme d'une carte de crédit, les objets nomades génèrent au surplus des contraintes physiques de format (carte de crédit) et d'épaisseur (0,8mm).

Généralement, de tels objets doivent comporter au minimum un microprocesseur, une pile, une interface de commande, notamment un microphone et une interface de sortie, notamment un haut-parleur.

Si l'interface de sortie a l'avantage d'être réversible, il peut alors servir également d'interface de commande, réduisant ainsi à trois seulement le contenu minimal d'un tel objet nomade.

En production, de tels objets nomades ont besoin de passer par une phase de personnalisation au cours de laquelle le microprocesseur reçoit des informations spécifiques et éventuellement des secrets. Selon l'art antérieur, la personnalisation est effectuée lors de la fabrication de la carte. Les informations spécifiques, notamment des données confidentielles, sont entrées dans un microprocesseur situé dans la carte.

Si l'interface d'entrée-sortie visée plus haut travaille à débit élevé, comme par exemple une carte sans contact hyperfréquence, on utilisera préférentiellement cette entrée-sortie opérationnelle pour s'en servir comme organe d'introduction des données spécifiques.

Il n'en est pas de même si l'organe d'entrée-sortie travaille dans la gamme des fréquences vocales. Le débit, dans ce cas, est limité par la bande passante et se retrouve à des niveaux très bas ne permettant ainsi d'introduire que des données en faible quantité, par exemple quelques dizaines d'octets.

Dès lors que l'on souhaite introduire un grand nombre de données dans la carte, apparaît la nécessité de pouvoir disposer d'un organe d'entrée supplémentaire de personnalisation.

Selon l'art antérieur, la solution consiste à réaliser des entrées sous forme de quatre à six points de contact. L'inconvénient majeur de cette solution est de nécessiter un nombre plus élevé de connexions, ce qui accroît le coût de production de la carte et fait diminuer sa fiabilité.

L'invention concerne un procédé pour entrer des données dans un objet électronique nomade se présentant sous la forme d'une carte de crédit.

Ce procédé est destiné à entrer les données postérieurement à la production dudit objet électronique nomade, notamment lors d'une phase de personnalisation postérieure à la fabrication de l'objet électronique nomade. Les données sont des données de programmation, notamment confidentielles, destinées à la programmation d'un microprocesseur situé dans l'objet nomade.

L'objet électronique nomade comporte deux coques, entre lesquelles sont insérées, outre le microprocesseur, au moins une pile, un organe de commande et une interface de sortie. L'interface de sortie est notamment de type galvanique, acoustique ou hyperfréquence.

Le microprocesseur comprend des entrées galvaniques et une entrée capacitive.

Le procédé, selon l'invention, comprend l'étape d'établir avec le microprocesseur des liaisons galvaniques. Ces liaisons galvaniques sont destinées à interconnecter les entrées galvaniques du microprocesseur avec la pile, l'organe de commande et l'interface de sortie.

Le procédé comprend en outre l'étape de mettre une sonde capacitive en regard de l'entrée capacitive, lors de la phase de personnalisation. La sonde est disposée à l'extérieur de l'objet électronique nomade du côté de la face extérieure de la coque concernée.

Ainsi, la liaison capacitive avec l'extérieur de l'objet électronique nomade peut être utilisée pour entrer les données de programmation du microprocesseur, postérieurement à la phase de production.

L'invention concerne également un système pour entrer des données dans un objet électronique nomade se présentant sous la forme d'une carte de crédit. Le système est destiné à entrer les données postérieurement à la production de l'objet électronique nomade, notamment lors d'une phase de personnalisation postérieure à la livraison de l'objet électronique nomade. Les données sont des données de programmation, notamment confidentielles, destinées à la programmation d'un microprocesseur situé dans l'objet nomade.

Le système, selon l'invention, comprend un objet électronique nomade.

L'objet électronique nomade comporte un microprocesseur ayant des entrées galvaniques et une entrée capacitive accessible de l'extérieur de l'objet électronique nomade. L'entrée capacitive est destinée à entrer les données de programmation du microprocesseur.

L'objet électronique nomade comporte en outre deux coques entre lesquelles sont insérées, outre ledit microprocesseur, au moins une pile, un organe de commande et une interface de sortie. L'interface de sortie est notamment de type galvanique, acoustique ou hyperfréquence.

L'objet électronique nomade comporte en outre des liaisons galvaniques destinées à interconnecter les entrées galvaniques du microprocesseur avec la pile, l'organe de commande et l'interface de sortie.

Le système, selon l'invention, comprend en outre une sonde capacitive située en regard de l'entrée capacitive et disposée du côté de la face extérieure de la coque concernée.

Ainsi, la liaison capacitive avec l'extérieur de l'objet électronique nomade peut être utilisée pour entrer les données de programmation du microprocesseur, postérieurement à la phase de production.

L'invention concerne également un objet électronique nomade se présentant sous la forme d'une carte de crédit et comportant un microprocesseur.

L'objet électronique nomade est conçu pour permettre l'entrée des données dans le microprocesseur postérieurement à la phase de production, notamment lors d'une phase de personnalisation de l'objet électronique nomade. Les données sont des données de programmation, notamment confidentielles, destinées à la programmation du microprocesseur.

L'objet électronique nomade comprend un microprocesseur. Le microprocesseur comporte des entrées galvaniques et une entrée capacitive. L'entrée capacitive est accessible de l'extérieur de l'objet électronique nomade. Elle est destinée à recevoir les données de programmation du microprocesseur.

L'objet électronique nomade comprend en outre deux coques entre lesquelles sont insérées, outre ledit microprocesseur, au moins une pile, un organe de commande et une interface de sortie. L'interface de sortie est notamment du type galvanique, acoustique ou hyperfréquence.

L'objet électronique nomade comprend en outre des liaisons galvaniques destinées à interconnecter les entrées galvaniques du microprocesseur avec la pile, l'organe de commande et l'interface de sortie.

L'invention concerne également une sonde pour entrer des données dans un objet électronique nomade se présentant sous la forme d'une carte de crédit. La sonde est destinée à entrer lesdites données postérieurement à la production de l'objet électronique nomade, notamment lors d'une phase de personnalisation de l'objet électronique nomade. Les données sont des données de programmation, notamment confidentielles, destinées à la programmation d'un microprocesseur situé dans l'objet nomade ;

L'objet électronique nomade comporte un microprocesseur ayant des entrées galvaniques et une entrée capacitive. L'entrée capacitive est accessible de l'extérieur de l'objet électronique nomade. Elle est destinée à entrer les données de programmation du microprocesseur.

L'objet électronique nomade comporte en outre deux coques entre lesquelles sont insérées, outre ledit microprocesseur, au moins une pile, un organe de commande et une interface de sortie. L'interface de sortie est notamment de type galvanique, acoustique ou hyperfréquence.

L'objet électronique nomade comporte enfin des liaisons galvaniques destinées à interconnecter le microprocesseur avec la pile, l'organe de commande et l'interface de sortie.

La sonde comporte un transducteur capacitif situé en regard de l'entrée capacitive et disposé à l'extérieur de l'objet nomade.

D'autres caractéristiques et avantages de l'invention apparaîtront à la lecture de la description de variantes de réalisation de l'invention, données à titre d'exemple indicatif et non limitatif, et de :
la figure 1 présentant de manière schématique un objet électronique nomade selon l'invention, destiné à émettre des signaux accoustiques et comprenant un microprocesseur connecté à une pile et à un haut-parleur,
la figure 2 présentant une vue en coupe d'un microproceseur installé sous l'une des coques d'un objet électronique nomade,
la figure 3 présentant une vue en coupe du microprocesseur, représenté par la figure 2, lors de la phase de l'entrée de données via une sonde capacitive.

On va maintenant décrire les figures.

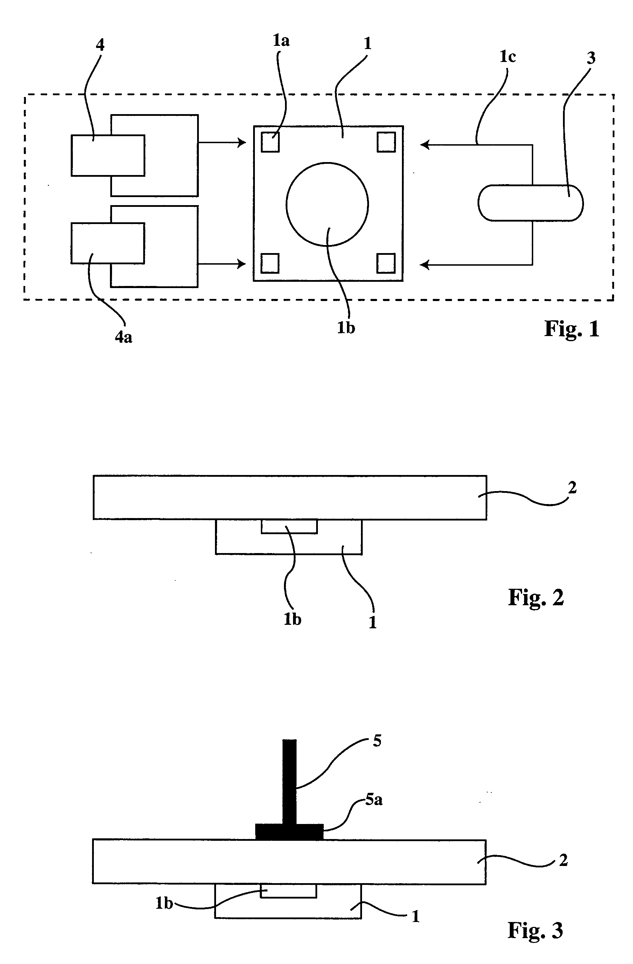

La figure 1 représente un objet électronique nomade 7, selon l'invention, destiné à émettre et à recevoir des signaux accoustiques. Cet objet électronique nomade 7 comporte un microprocesseur 1, une pile 3, un microphone 4 et un haut-parleur ou buzzer 4a.

Le microprocesseur 1 comporte des entrées galvaniques 1a et une entrée capacitive 1b. Des liaisons galvaniques 1c permettent d'interconnecter le microprocesseur 1 avec la pile 3, le microphone 4 et le buzzer 4a. La pile 3 est destinée à alimenter en énergie le microprocesseur 1.

Les figures 2 et 3 représentent le microprocesseur 1 en vue de coupe. Le microprocesseur 1 est situé sous une des coques 2 de l'objet électronique nomade 7. L'entrée capacitive 1b du microprocesseur 1 est orientée vers l'extérieur de l'objet électronique nomade 7 de manière à pouvoir recevoir ultérieurement des données provenant d'une sonde capacitive 5, au travers de l'une des coques 2.

Il est donc possible de produire intégralement l'objet électronique nomade 7 avant d'avoir entré des données spécifiques dans le microprocesseur 1.

Lors de la phase de personnalisation de l'objet électronique nomade 7, on utilise une sonde capacitive 5 comprenant un transducteur capacitif Sa. On approche le transducteur capacitif 5a de la sonde 5 en regard de l'entrée capacitive 1b du microprocesseur 1, situé sous l'une des coques 2 de l'objet électronique nomade 7.

Ainsi, les données spécifiques de personnalisation transitent de la sonde 5 vers le microprocesseur 1 au travers de l'une des coques 2 de l'objet électronique nomade 7.

## Revendications

1. Procédé pour entrer des données dans un objet électronique nomade (7) se présentant sous la forme d'une carte de crédit ; ledit procédé étant destiné à entrer lesdites données postérieurement à la production dudit objet électronique nomade (7), notamment lors d'une phase de personnalisation postérieure à la fabrication dudit objet électronique nomade (7) ; lesdites données étant des données de programmation, notamment confidentielles, destinées à la programmation d'un microprocesseur (1) situé dans l'objet nomade (7) ;
ledit objet électronique nomade (7) comportant deux coques (2) entre lesquelles sont insérés, outre ledit microprocesseur (1), au moins : une pile (3), un organe de commande (4) et une interface de sortie (4a), notamment de type galvanique, acoustique ou hyperfréquence :
ledit microprocesseur (1) ayant des entrées galvaniques (1a) et une entrée capacitive (1b) ;
ledit procédé comprenant :
- l'étape d'établir avec le microprocesseur (1) des liaisons galvaniques (1c) destinées à interconnecter les entrées galvaniques (1a) dudit microprocesseur (1) avec ladite pile (3), ledit organe de commande (4) et ladite interface de sortie (4a),
- l'étape de mettre une sonde capacitive (5) en regard de ladite entrée capacitive (1b), lors de phase de personnalisation ; ladite sonde (5) étant disposée à l'extérieure de l'objet électronique nomade (7) du côté de la face extérieure de la coque (2)concernée,
*(de sorte que la liaison capacitive avec l'extérieur de l'objet électronique nomade peut être utilisée pour entrer les données de programmation dudit microprocesseur postérieurement à la phase de production).*

2. Système pour entrer des données dans un objet électronique nomade (7) se présentant sous la forme d'une carte de crédit ; ledit système étant destiné à entrer lesdites données postérieurement à la production dudit objet électronique nomade (7), notamment lors d'une phase de personnalisation postérieure à la livraison dudit objet électronique nomade (7) ; lesdites données étant des données de programmation, notamment confidentielles, destinées à la programmation d'un microprocesseur (1) situé dans l'objet nomade (7) ;
ledit système comprenant un objet électronique nomade (7) comportant :
• un microprocesseur (1) ayant des entrées galvaniques (1a) et une entrée capacitive (1b) accessible de l'extérieur de l'objet électronique nomade (7) ; ladite entrée capacitive (1b) étant destinée à entrer lesdites données de programmation dudit microprocesseur (1).
• deux coques (2) entre lesquelles sont insérés, outre ledit microprocesseur (1), au moins : une pile (3), un organe de commande (4) et une interface de sortie (4a), notamment de type galvanique, acoustique ou hyperfréquence,
• des liaisons galvaniques (1c) destinées à interconnecter les entrées galvaniques (1a) dudit microprocesseur (1) avec ladite pile (3), ledit organe de commande (4) et ladite interface de sortie (4a) ;
ledit système comprenant en outre :
- une sonde capacitive (5) située en regard de ladite entrée capacitive (1b) et disposée du côté de la face extérieure de la coque (2) concernée,
*(de sorte que la liaison capacitive avec l'extérieur de l'objet électronique nomade peut être utilisée pour entrer les données de programmation dudit microprocesseur postérieurement à la phase de production).*

3. Objet électronique nomade (7) se présentant sous la forme d'une carte de crédit comportant un microprocesseur (1) ; ledit objet électronique nomade (7) étant conçu pour recevoir des données dans ledit microprocesseur (1) postérieurement à la phase de production, notamment lors d'une phase de personnalisation dudit objet électronique nomade (7) ; lesdites données étant des données de programmation, notamment confidentielles, destinées à la programmation dudit microprocesseur (1);
ledit objet électronique nomade (7) comportant :
- un microprocesseur (1) ayant des entrées galvaniques (1a) et une entrée capacitive (1b) accessible de l'extérieur de l'objet électronique nomade (7), destinée à entrer lesdites données de programmation dudit microprocesseur (1).
- deux coques (2) entre lesquelles sont insérés, outre ledit microprocesseur (1), au moins : une pile (3), un organe de commande (4) et une interface de sortie (4a), notamment du type galvanique, acoustique ou hyperfréquence,
- des liaisons galvaniques (1c) destinées à interconnecter les entrées galvaniques (1a) dudit microprocesseur (1) avec ladite pile (3), ledit organe de commande (4) et ladite interface de sortie (4a).

4. Sonde (5) pour entrer des données dans un objet électronique nomade (7) se présentant sous la forme d'une carte de crédit ; ladite sonde (5) étant destinée à entrer lesdites données postérieurement à la production dudit objet électronique nomade (7), notamment lors d'une phase de personnalisation dudit objet électronique nomade (7) ; lesdites données étant des données de programmation, notamment confidentielles, destinées à la programmation d'un microprocesseur (1) situé dans l'objet nomade (7);
ledit objet électronique nomade (7) comportant :
- un microprocesseur (1) ayant des entrées galvaniques (1a) et une entrée capacitive (1b), accessible de l'extérieur de l'objet électronique nomade (7), destinée à recevoir lesdites données de programmation dudit microprocesseur (1);
- deux coques (2) entre lesquelles sont insérés, outre ledit microprocesseur (1), au moins : une pile (3), un organe de commande (4) et une interface de sortie (4a), notamment de type galvanique, acoustique ou hyperfréquence,
- des liaisons galvaniques (1c) destinées à interconnecter le microprocesseur (1) avec ladite pile (3), ledit organe de commande (4) et ladite interface de sortie (4a) ;
ladite sonde (5) comportant un transducteur capacitif (5a) situé en regard de ladite entrée capacitive (1b) et étant disposée à l'extérieur dudit objet nomade (7).
